# EUROPÄISCHE PATENTSCHRIFT

(11) **EP 3 970 995 B1**
(45) Veröffentlichungstag und Bekanntmachung des Hinweises auf die Patenterteilung: **09.08.2023**
(21) Anmeldenummer: 21191501.2
(22) Anmeldetag: 16.08.2021
(51) Int. Cl.: B60C 11/12, B29C 33/42, B29D 30/06

(54) **FAHRZEUGREIFEN MIT EINEM LAUFSTREIFEN**
VEHICLE TYRES WITH A TREAD
PNEUS DE VÉHICULE DOTÉ D'UNE BANDE DE ROULEMENT

(30) Priorität: 22.09.2020 DE 102020211825
(43) Veröffentlichungstag der Anmeldung: 23.03.2022
(73) Patentinhaber: Continental Reifen Deutschland GmbH, 30165 Hannover (DE)
(72) Erfinder: Hoppe, Nicholas, 30419 Hannover (DE); Dzick, Jürgen, 30419 Hannover (DE)
(74) Vertreter: Continental Corporation

(56) Entgegenhaltungen:
- US-A- 4 945 966
- US-A- 4 994 126
- US-A- 5 385 189
- US-A1- 2008 078 487
- US-A1- 2011 180 191
- US-A1- 2012 048 439

## Beschreibung

Die vorliegende Erfindung bezieht sich auf eine Reifenform zur Herstellung eines Fahrzeugluftreifens mit einem Laufstreifen aus Gummimaterial.

Aus US2011/180191 und US2012/048439 sind jeweils Reifenformen zur Herstellung eines Fahrzeugluftreifens mit einem Laufstreifen aus Gummimaterial bekannt.

Bei der Herstellung von Fahrzeugreifen wird der fertig aufgebaute Reifen als sogenannter "grüner Reifen" in eine Heiz- oder Vulkanisationspresse eingebracht, in der er sein Profil erhält und die plastische Kautschukmischung unter Einfluss von Druck und Temperatur zu einem elastischen Gummimaterial wird. In der Heiz- oder Vulkanisationspresse liegt der Reifen in einer sogenannten Reifenform, mittels der das Profil auf den Laufstreifen geprägt wird. Dazu ist im Inneren der Form das angestrebte Reifenprofil als Negativmuster eingeprägt.

Das Reifenprofil hat die Aufgabe, eine optimale Haftung bei jeder Geschwindigkeit und jeder Witterung zu ermöglichen. Dazu weist es typischerweise in der Lauffläche einer Vielzahl von Profilblöcken auf, die durch dazwischen angeordnete Freiräume, die sogenannten Profilrillen, voneinander getrennt sind. Kleine Einschnitte in den Profilblöcken werden als Lamellen bezeichnet.

Im Gebrauch des Fahrzeugreifens nimmt die Profiltiefe durch Abnutzung des Reifens allmählich ab und die Reifenperformance ändert sich. Nach einer Herstellerempfehlung soll der Reifen bei 2 mm Restprofiltiefe getauscht werden.

Es ist eine Aufgabe der vorliegenden Erfindung, eine Reifenform zur Herstellung eines Fahrzeugreifen mit einem Laufstreifen aus Gummimaterial anzugeben, der im abgenutzten Zustand mit wenigen Millimetern Restprofiltiefe eine verbesserte Performance bietet.

Diese Aufgabe wird gelöst durch den Gegenstand der unabhängigen Anspruchs 1.

Vorteilhafte Ausführungsformen und Weiterbildungen sind Gegenstand der Unteransprüche.

Gemäß einem Aspekt der Erfindung wird eine Reifenform zur Herstellung des beschriebenen Fahrzeugreifens bereitgestellt, wobei die Reifenform eine Basisform und zumindest ein in die Basisform einsetzbares Formelement umfasst, wobei das Formelement einen Basisabschnitt mit einer Unterseite zur Anbringung an der Basisform aufweist, wobei ein Querschnitt des Basisabschnitts die Breite B hat. Ferner weist das Formelement eine Mehrzahl von sich an eine Oberseite des Basisabschnitts anschließenden, durch Zwischenräume beabstandeten Fortsätzen auf, deren Querschnitte die Breite b aufweisen. Dabei gilt b<B.

Somit ist das in die Basisform einsetzbare Formelement als Negativ der lamellenartigen Einschnitte ausgestaltet.

Die Reifenform hat den Vorteil, dass sie die Herstellung eines Fahrzeugreifens ermöglicht, der im abgenutzten Zustand mit wenigen Millimetern Restprofiltiefe eine verbesserte Performance bietet.

Darüber hinaus ist die Reifenform wegen des in die Basisform einsetzbaren Formelements besonders flexibel, weil das Formelement austauschbar ausgebildet sein kann. Das Formelement kann dabei beispielsweise im 3D-Druck herstellbar sein aus Stahl, Aluminium oder einem anderen Material, insbesondere Metall. Es kann jedoch auch mittels Fräsen hergestellt werden. Das Formelement kann mit der Basisform auch beispielsweise durch Gießen oder Schweißen oder auf andere Weise dauerhaft verbunden werden.

Die Zwischenräume zwischen den Fortsätzen können beim Vulkanisieren des Reifens beispielsweise über Entlüftungskanäle entlüftet werden. Dazu sind zumindest teilweise quer zur Erstreckung der Zwischenräume verlaufende Entlüftungskanäle vorgesehen, die sich durch die Fortsätze erstrecken.

Alternativ oder zusätzlich können Entlüftungskanäle vorgesehen sein, die sich durch den Basisabschnitt in Richtung der Basisform erstrecken. Diese Ausführungsform hat den Vorteil, dass gegebenenfalls Entlüftungsstrukturen mit genutzt werden können, die auf dem Formgrund zur Formentlüftung verbaut sind.

Erfindungsgemäß sind in dem Basisabschnitt zwischen den Fortsätzen Kavitäten vorgesehen, über die die Zwischenräume entlüftbar sind.

Vorzugsweise gilt für die Breite B des Basisabschnitts:
1 mm ≤ B ≤ 5 mm.

Ausführungsformen der Erfindung werden im Folgenden anhand schematischer Zeichnungen beispielhaft beschrieben.
- Figur 1: zeigt eine Schnittansicht eines Fahrzeugreifens in einer Reifenform gemäß einer Ausführungsform der Erfindung,
- Figur 2: zeigt ein Formelement der Reifenform gemäß einer Ausführungsform der Erfindung in einer perspektivischen Ansicht;
- Figur 3: zeigt ein Formelement der Reifenform gemäß einer Ausführungsform der Erfindung in einer Schnittansicht;
- Figur 4: zeigt ein Formelement der Reifenform gemäß einer weiteren Ausführungsform der Erfindung in einer Schnittansicht;
- Figur 5: zeigt ein Formelement der Reifenform gemäß einer weiteren Ausführungsform der Erfindung in einer Schnittansicht;
- Figur 6: zeigt ein Formelement der Reifenform gemäß einer weiteren Ausführungsform der Erfindung in einer Schnittansicht;
- Figur 7: zeigt ein Formelement der Reifenform gemäß einer weiteren Ausführungsform der Erfindung in einer Schnittansicht;
- Figur 8: zeigt ein Formelement der Reifenform gemäß einer weiteren Ausführungsform der Erfindung in einer Schnittansicht;
- Figur 9: zeigt einen Ausschnitt aus einem Fahrzeugreifen gemäß einer Ausführungsform der Erfindung und
- Figur 10: zeigt einen Ausschnitt aus dem Fahrzeugreifen gemäß Figur 9 in einem abgefahrenen Zustand.

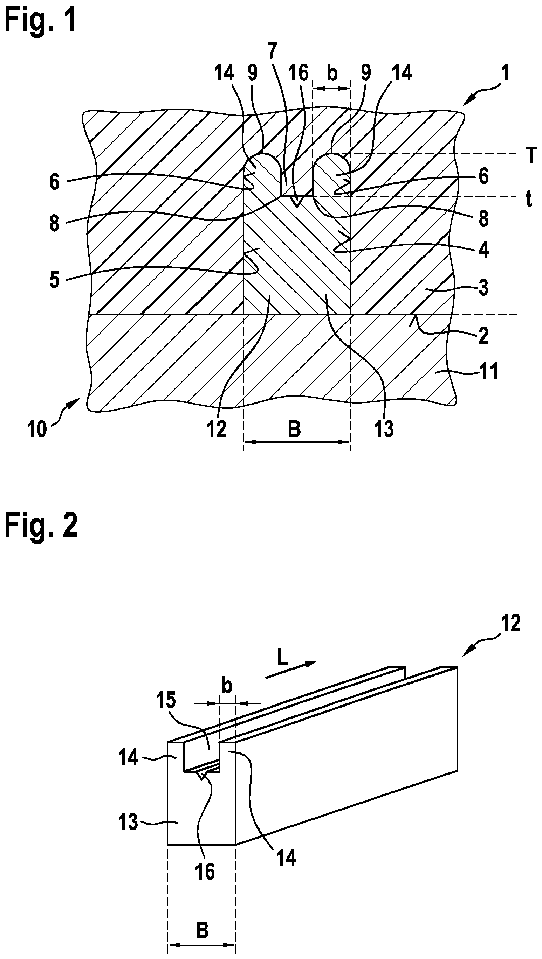

Figur 1 zeigt schematisch eine Schnittansicht durch einen Fahrzeugreifen 1 während des Einformens in einer Reifenform 10. Der Fahrzeugreifen 1 weist eine Lauffläche 2 auf, die im Betrieb mit der Fahrbahn in Kontakt kommt. Die Lauffläche 2 ist durch eine Anzahl von Profilblöcken 3 gebildet, von denen in der gezeigten Ansicht lediglich zwei sichtbar sind. Die Profilblöcke 3 sind voneinander durch Profilrillen getrennt. Neben den tiefen Profilrillen weist der Fahrzeugreifen 1 auch eine Anzahl von nicht ganz so tief einschneidenden Lamellen und ferner lamellenartige Einschnitte 4 auf, von denen einer in Figur 1 im Querschnitt gezeigt ist.

Der Fahrzeugreifen 1 besteht zum großen Teil beispielsweise aus einer Kautschukmischung, die während eines Vulkanisiervorgangs in der Reifenform zu elastischem Gummimaterial vulkanisiert wird. Dabei wird das Profil in die Lauffläche 2 eingeprägt. Dazu weist die Reifenform 10 ein Negativ des Reifenprofils auf. In der gezeigten Ansicht ist eine Basisform 11 der Reifenform 10 sichtbar sowie ein Formelement 12 zum Einprägen des lamellenartigen Einschnitts 4.

Das Formelement 12, das in Figur 2 in einer perspektivischen Ansicht gezeigt ist, weist einen im wesentlichen quaderförmigen Basisabschnitt 13 mit zwei Fortsätzen 14 an seiner Oberseite auf. Die beiden Fortsätze 14 sind durch einen Zwischenraum 15 voneinander getrennt. Auf dem Boden des Zwischenraums 15 ist eine in Längsrichtung L des Formelements 12 verlaufende Kavität 16 zur Entlüftung des Zwischenraums 15 während des Vulkanisiervorgangs angeordnet.

Das Formelement 12 kann im 3D-Druck hergestellt, aber auch gefräst oder auf andere Weise hergestellt werden. Es ist, gegebenenfalls kombiniert mit weiteren Formelementen zum Einprägen des Reifenprofils, in die Basisform 11 einsetzbar.

Wie in Figur 1 sichtbar ist, prägt das Formelement 12 einen lamellenartigen Einschnitt 4 in die Lauffläche 2 des Fahrzeugreifens 1 ein, wobei der Einschnitt 4 bis zu einer Tiefe t durch einen Schlitz 5 der Breite B gebildet ist und darüber zwei durch die Fortsätze 14 eingeprägte Schlitze 6 mit der Breite b aufweist, die sich von der Tiefe t bis zu einer Tiefe T erstrecken. Dazu weist der Basisabschnitt 13 eine Breite B auf und die Fortsätze 14 jeweils eine Breite b.

Die Breite B des Basisabschnitts 13 entspricht zumindest während des Einformens der Breite B des Schlitzes 5. Am fertigen, entformten und abgekühlten Reifen können die Breiten gegebenenfalls voneinander abweichen, wenn es beispielsweise zu einer Schrumpfung von Material kommt. Sowohl die Abmessungen des Reifens als auch die der Reifenform können je nach Temperatur leicht variieren. Der Einfachheit halber werden hier dieselben Bezeichnungen b, B, t, T sowohl für den Reifen als auch für die Form verwendet und bezogen auf den Zustand während des Einformens.

Stirnseiten 9 der Schlitze 6 sind in der in Figur 1 gezeigten Ausführungsform abgerundet ausgebildet. Sie können jedoch auch flach oder spitz geformt sein. Die Schlitze 6 sind voneinander durch einen Steg 7 getrennt, der in dem Zwischenraum 15 zwischen den Fortsätzen 14 ausgeformt wird. Der Steg 7 weist Kanten 8 auf, die sich in Längsrichtung des Einschnitts 4 erstrecken, die durch den Pfeil L in Figur 2 angedeutet ist.

Das in Figur 2 gezeigte Formelement 12 erstreckt sich linear in Längsrichtung L. Es ist jedoch auch denkbar, dass es in Längsrichtung L einen wellenförmigen oder zickzackförmigen Verlauf aufweist. Wird ein derartiges Formelement verwendet, weist auch der dadurch eingeprägte Einschnitt 4 in Längsrichtung einen wellenförmigen oder zickzackförmigen Verlauf auf, wie er von Lamellen bekannt ist.

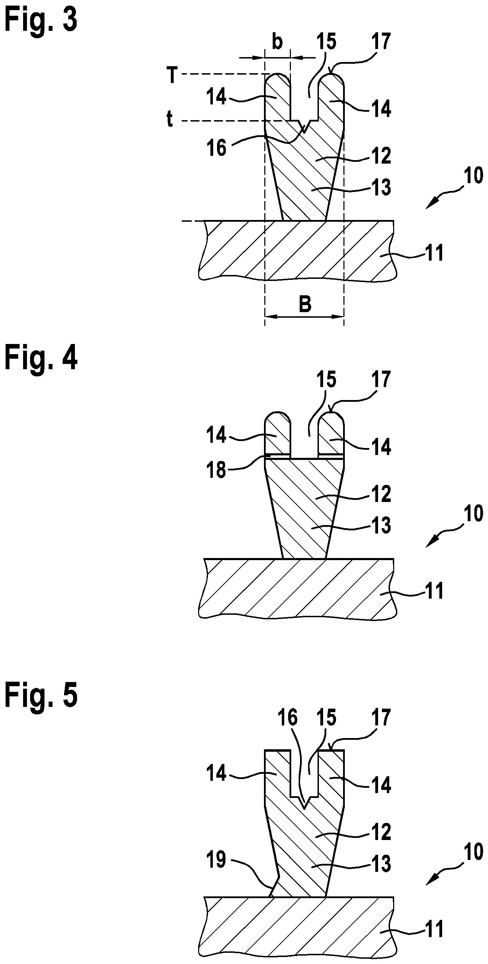

Die Figuren 3 bis 8 zeigen verschiedene Ausführungsformen des Formelements 12, die unterschiedlich geformte Einschnitte 4 in den Fahrzeugreifen 1 einprägen können. Das in Figur 3 gezeigte Formelement 12 entspricht im Wesentlichen dem in Figur 1 gezeigten, wobei sein Basisabschnitt 13 an seinem der Basisform 11 zugewandten Ende schmaler ausgebildet ist als in der Tiefe t. Derartige Hinterschneidungen sind in Reifenprofilen häufiger anzutreffen und sind aufgrund der Elastizität des Materials und gegebenenfalls benachbarter Profilrillen gut entformbar.

Figur 4 zeigt eine weitere Ausführungsform des Formelements 12, die sich von der in Figur 3 gezeigten dadurch unterscheidet, dass der Zwischenraum 15 nicht durch eine auf seinem Boden angeordnete Kavität 16 entlüftet wird, sondern durch quer verlaufende Entlüftungskanäle 18. Derartige Strukturen sind insbesondere im 3-D Druck besonders einfach herstellbar, können aber auch in ein beispielsweise gefrästes Bauteil durch Bohrungen eingebracht sein.

Figur 5 zeigt eine weitere Ausführungsform des Formelements 12, die sich von der in Figur 3 gezeigten dadurch unterscheidet, dass die Endflächen 17 der Fortsätze 14 nicht abgerundet, sondern flach ausgebildet sind. Zudem weist der Basisabschnitt 13 einen angefasten Kantenbereich 19 auf, mittels dessen Profilstrukturen in den Fahrzeugreifen 1 eingeprägt werden, die das Trockenbremsverhalten günstig beeinflussen.

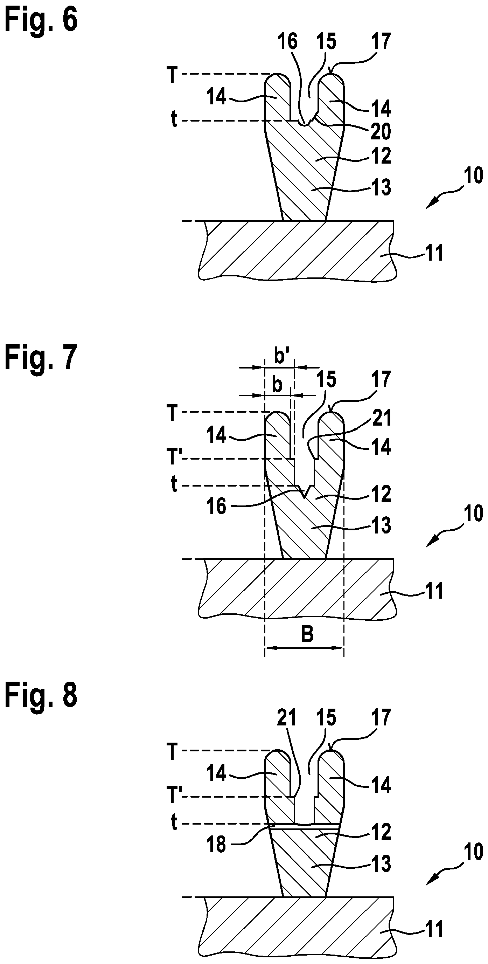

Figur 6 zeigt eine weitere Ausführungsform des Formelements 12, die sich von der in Figur 3 gezeigten durch die Querschnittsform der Kavität 16 unterscheidet sowie durch einen angeschrägten Fortsatz 14, wobei dessen Schräge 20 eine angefaste Kante 8 in den Fahrzeugreifen 1 einprägt.

Figur 7 zeigt eine weitere Ausführungsform des Formelements 12. Bei dieser Ausführungsform variiert die Breite b der Fortsätze 14 stufenförmig zunächst in einer Tiefe T', das heißt, in der Tiefe T' weisen die Fortsätze 14 einen Absatz 21 auf und haben zwischen der Tiefe T' und der Tiefe t die Breite b', wobei b<b' gilt. Dadurch wird in den Fahrzeugreifen 1 ein Einschnitt 4 eingeprägt, der bis in eine Tiefe t einen Schlitz 5 der Breite B aufweist, ab einer Tiefe t bis in eine Tiefe T' zwei Schlitze 6 der Breite b' und ab einer Tiefe T' bis zur Tiefe T zwei Schlitze 6 mit der Breite b. Der sich zwischen den Schlitzen 6 ausformende Steg 7 weist somit ebenfalls einen Absatz auf.

Figur 8 zeigt eine weitere Ausführungsform des Formelements 12, die sich von der in Figur 7 gezeigten lediglich dadurch unterscheidet, dass der Zwischenraum 15 mittels Entlüftungskanälen 18 entlüftet wird.

Die in den Figuren 3 bis 8 gezeigten Merkmale der Formelemente 12 sind untereinander kombinierbar. Insbesondere sind unterschiedlich geformte Endflächen 17, sich stufenförmig verändernde Breiten b, b', Entlüftungen mittels Kanälen 18 oder Kavitäten 16 und angefaste Kanten beliebig kombinierbar, um eine gewünschte Reifenperformance zu erhalten.

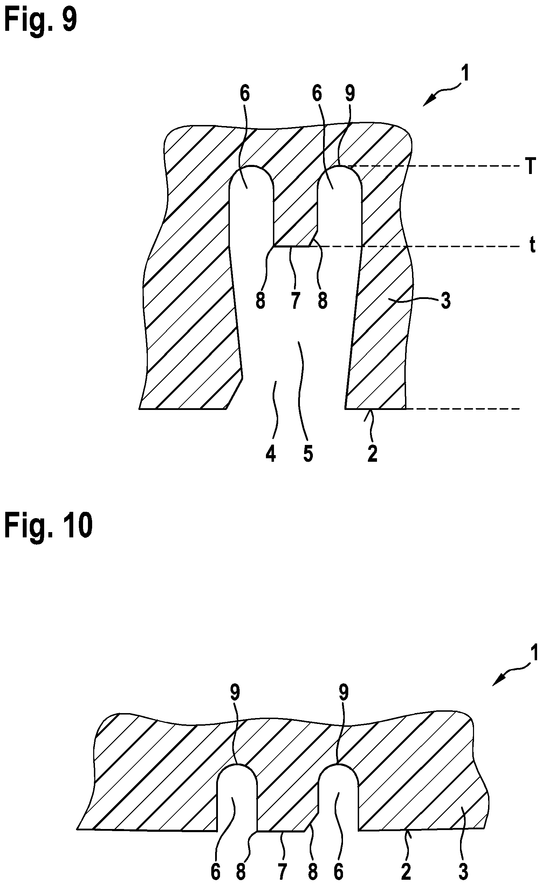

Die Figuren 9 und 10 zeigen einen Ausschnitt aus einem Fahrzeugreifen 1 in Schnittansicht, wobei Figur 9 einen lamellenartigen Einschnitt 4 bei einem neuen Fahrzeugreifen 1 darstellt, während Figur 10 denselben Einschnitt 4 bei einem bereits zu einem großen Teil abgefahrenen Fahrzeugreifen 1 mit geringem Restprofil darstellt.

Wie aus dem Vergleich der Figuren 9 und 10 ersichtlich ist, wird im Laufe der Zeit der Profilblock 3 bis zu einer Tiefe t abgetragen. Wenn das erfolgt ist, ist der Schlitz 6 mit der Breite B vollständig verschwunden. An der Lauffläche 2 des Fahrzeugreifens 1 liegt dann der Steg 7 mit seinen Kanten 8 frei und kommt in Kontakt mit der Fahrbahn. Da bei einem bereits weitgehend abgefahrenen Reifenprofil Leerräume zwischen Profilblöcken 3 wegen ihres stark verringerten Volumens nur noch einen verringerten Beitrag zur Reifenperformance leisten, ist es vorteilhaft, dass in dem in Figur 10 illustrierten Zustand des Fahrzeugreifens 1 zusätzliche Kanten 8 für den Kontakt mit der Fahrbahn zur Verfügung stehen.

## Patentansprüche

1. Reifenform (10) zur Herstellung eines Fahrzeugreifens (1), umfassend eine Basisform (11) und zumindest ein in die Basisform (11) einsetzbares Formelement (12), wobei das Formelement (12) folgendes aufweist:
- einen Basisabschnitt (13) mit einer Unterseite zur Anbringung an der Basisform (11), wobei ein Querschnitt des Basisabschnitts (13) die Breite B aufweist;
- eine Mehrzahl sich an eine Oberseite des Basisabschnitts (13) anschließenden, durch Zwischenräume (15) beabstandeten Fortsätzen (14), deren Querschnitte die Breite b aufweisen, wobei die Breite b der Fortsätze (14) kleiner ist als die Breite B des Basisabschnitts, **dadurch gekennzeichnet, dass**
in dem Basisabschnitt (13) zwischen den Fortsätzen (14) Kavitäten (16) vorgesehen sind, über die die Zwischenräume (15) entlüftbar sind.

2. Reifenform (10) nach Anspruch 1, wobei die Zwischenräume (15) zwischen den Fortsätzen (14) über quer zur Erstreckung der Zwischenräume (15) durch die Fortsätze (14) verlaufende Entlüftungskanäle (18) und/oder über sich durch den Basisabschnitt (13) in Richtung der Basisform (11) erstreckende Entlüftungskanäle (18) entlüftbar sind.

3. Reifenform (10) nach einem der Ansprüche 1 bis 2, wobei für die Breite B des Basisabschnitts gilt:
1 mm ≤ B ≤ 5 mm.

4. Verwendung einer Reifenform (10) gemäß einem der vorhergehenden Ansprüche.

## Claims

1. Tyre mould (10) for producing a vehicle tyre (1), comprising a base mould (11) and at least one mould element (12) that can be inserted into the base mould (11), wherein the mould element (12) has the following:
- a base portion (13) with an underside for attaching to the base mould (11), wherein a cross section of the base portion (13) has the width B;
- a plurality of projections (14), which adjoin an upper side of the base portion (13), are spaced apart by intermediate spaces (15) and the cross section of which has the width b, wherein the width b of the projections (14) is less than the width B of the base portion, **characterized in that**
cavities (16) by way of which the intermediate spaces (15) can be vented are provided in the base portion (13) between the projections (14).

2. Tyre mould (10) according to Claim 1, wherein the intermediate spaces (15) between the projections (14) can be vented by way of venting channels (18) running through the projections (14) transversely to the extent of the intermediate spaces (15) and/or by way of venting channels (18) extending through the base portion (13) in the direction of the base mould (11).

3. Tyre mould (10) according to either of Claims 1 and 2, wherein the following applies for the width B of the base portion:
1 mm ≤ B ≤ 5 mm.

4. Use of a tyre mould (10) according to one of the preceding claims.

## Revendications

1. Moule de pneumatique (10) destiné à la fabrication d'un pneumatique de véhicule (1), ledit moule de pneumatique comprenant un moule de base (11) et au moins un élément de moule (12) insérable dans le moule de base (11), l'élément de moule (12) comportant ce qui suit :
- une portion de base (13) pourvue d'un côté inférieur destiné à la fixation au moule de base (11), une section transversale de la portion de base (13) ayant la largeur B ;
- une pluralité de saillies (14) qui sont espacées par des espaces intermédiaires (15), qui se raccordent à un côté supérieur de la portion de base (13) et dont les sections transversales ont la largeur b, la largeur b des saillies (14) étant inférieure à la largeur B de la portion de base, **caractérisé en ce que**
des cavités (16), qui permettent de purger les espaces intermédiaires (15), sont ménagées dans la portion de base (13) entre les saillies (14).

2. Moule de pneumatique (10) selon la revendication 1, les espaces intermédiaires (15) entre les saillies (14) pouvant être purgés par le biais de canaux de purge (18) qui s'étendent à travers les saillies (14) transversalement à l'extension des espaces intermédiaires (15) et/ou par le biais de canaux de purge (18) qui s'étendent à travers la portion de base (13) dans la direction du moule de base (11).

3. Moule de pneumatique (10) selon l'une des revendications 1 à 2, la largeur B de la portion de base satisfaisant à :
1 mm ≤ B ≤ 5 mm.

4. Utilisation d'un moule de pneumatique (10) selon l'une des revendications précédentes.
